# FASCICULE DE BREVET EUROPEEN

(11) **EP 3 947 295 B1**
(45) Date de publication et mention de la délivrance du brevet: **01.01.2025**
(21) Numéro de dépôt: 19720143.7
(22) Date de dépôt: 25.03.2019
(51) Int. Cl.: C02F 1/467, C02F 1/72

(54) **DISPOSITIF ET PROCÉDÉ DE GESTION DE FLUIDES NÉCESSAIRES À L'EXPLOITATION D'UNE INSTALLATION FIXE OU MOBILE TEL UN VÉHICULE**
VORRICHTUNG UND VERFAHREN ZUR STEUERUNG VON ZUR VERWENDUNG EINER FESTEN ODER BEWEGLICHEN ANLAGE WIE EINEM FAHRZEUG NOTWENDIGEN FLUIDEN
DEVICE AND METHOD FOR CONTROLLING FLUIDS NECESSARY FOR USING A FIXED OR MOVABLE FACILITY, SUCH AS A VEHICLE

(43) Date de publication de la demande: 09.02.2022
(73) Titulaire: Prodose, 31660 Bessieres (FR)
(72) Inventeur: BOUKARI, Morou, 31400 TOULOUSE (FR); AURIOL, Marc, 31130 FLOURENS (FR)
(74) Mandataire: Leone, Eloïse
(86) Numéro de dépôt international: PCT/FR2019/050669
(87) Numéro de publication internationale: WO 2020/193871

(56) Documents cités:
- WO-A1-2016/016569
- WO-A2-2010/142924
- US-A1- 2016 032 463
- US-B1- 6 255 009

## Description

### DOMAINE D'APPLICATION DE L'INVENTION

La présente invention a trait au domaine de la gestion de fluides nécessaires à l'exploitation d'une installation fixe ou mobile tel un véhicule et notamment aux adaptations permettant de fournir, produire, stocker, consommer, évacuer lesdits fluides dans les meilleures conditions.

### DESCRIPTION DE L'ART ANTÉRIEUR

Dans le cadre de l'exploitation d'un véhicule tel un aéronef, une pluralité de fluides doit être gérée par l'exploitant.

Ainsi, par exemple, il est nécessaire de fournir de l'oxygène pur aux passagers d'un avion notamment en cas de dépressurisation de la cabine. Cette mise à disposition d'oxygène se fait pour un nombre limité de minutes, le temps de permettre à l'avion de descendre à une altitude ne requérant pas la pressurisation. La fourniture de cet oxygène requiert son stockage ou le stockage des produits participant à sa production. Ce stockage définit un encombrement et une masse nécessitant la disponibilité d'un volume et une alimentation en énergie pour l'aéronef.

Un autre fluide nécessaire à l'exploitation d'un avion transportant des passagers est l'eau potable. Cette eau est classiquement embarquée au sol ce qui requiert un volume de stockage important et définit une masse également importante. Ce stockage définit donc un encombrement et une masse consommatrice d'énergie au décollage et en vol. L'approvisionnement en eau se heurte également à des problèmes de qualité de l'eau qui ne présente pas les mêmes critères selon les pays (en présentant par exemple des proportions de bactéries et/ou de calcaire différentes).

Un entartrage des dispositifs de cafetière est susceptible de requérir l'arrêt de l'avion et une opération de maintenance onéreuse.

La présence éventuelle de bactéries requiert le traitement de l'eau consommée. Or, les systèmes connus exploitant le chlore et/ou la production d'ultra-violets ne présentent qu'une efficacité relative. Le stockage et la distribution des produits de traitement de l'eau requièrent un volume et de l'énergie susceptible de présenter des coûts.

De plus, si un bon traitement de l'eau consommée peut être finalement atteint, il n'en est pas de même pour les canalisations. Le traitement du réseau d'eau potable requiert l'immobilisation de l'avion et présente donc des coûts pour son exploitant.

D'autres fluides susceptibles de devoir être gérés aussi bien dans le cadre d'une exploitation d'aéronef que dans celle d'un véhicule d'une manière générale (notamment les véhicules à roues) sont ceux nécessaires au fonctionnement d'une pile à combustible. Ces dispositifs sont amenés à produire de l'énergie électrique en se substituant au moins partiellement aux batteries. Ces dispositifs ont pour avantages de présenter un meilleur rendement que celui des batteries tout en ne produisant pas d'oxyde de carbone ou d'azote. Ces dispositifs ont également pour avantage de permettre la production d'eau.

Néanmoins, ces dispositifs présentent également plusieurs inconvénients dont ceux rappelés ci-dessous :
- ils peuvent présenter un dégagement de chaleur très important,
- les piles à combustible fonctionnant avec de l'hydrogène requièrent le stockage de ce dernier soit rempli lorsque l'aéronef est au sol, soit produit en vol par électrolyse de l'eau laquelle requiert plus d'énergie que ce que peut produire une pile à combustible;
- Les piles à combustible fonctionnant avec de l'oxygène requièrent le stockage de ce dernier;
- L'eau qui n'est produite qu'en petite quantité (insuffisante) nécessite une reminéralisation avant d'être consommée ce qui requiert un dispositif additionnel;
- La réversibilité de tels dispositifs consomme plus d'énergie qu'ils n'en produisent,
- etc...

Afin de résoudre les problèmes de surtension et de production de chaleur et afin de se libérer de la contrainte de la présence d'oxygène, il est connu d'utiliser le peroxyde d'hydrogène comme substitut en réalisant la réduction du peroxyde en ion hydroxyde OH⁻. Néanmoins, la réduction du peroxyde ne résout pas l'ensemble des problèmes aussi bien au niveau de la pile à combustible que de celui de la gestion des autres fluides.

Le document WO201601656569 décrit un procédé et un dispositif de gestion de fluides nécessaires à l'exploitation d'un véhicule notamment un aéronef, remarquable en ce qu'il comprenait une opération d'oxydation anodique d'une solution de peroxyde d'hydrogène à des fins de production de dioxygène, d'eau et de cations d'hydrogène par soumission de ladite solution à un courant électrique produit par une source d'alimentation en électricité. Néanmoins, ce document ne résout pas tous les problèmes liés au transport et au stockage du peroxyde.

### DESCRIPTION DE L'INVENTION

Ce que constatant, la demanderesse a mené des recherches visant à apporter une solution aux inconvénients ci-dessus décrits. Ces recherches ont abouti à la conception et à la réalisation d'un dispositif et d'un procédé de gestion de fluides nécessaires à l'exploitation de véhicule non seulement de type aéronef mais également tout type de véhicule exploitant l'électricité. La demanderesse a également cherché à appliquer ces recherches à d'autres installations telles des installations fixes exploitant les mêmes fluides.

La caractéristique principale de l'invention est définie par le contenu de la première revendication.

Cette caractéristique est particulièrement avantageuse en ce qu'elle permet sur la base d'un seul fluide soumis à un courant électrique, de disposer par une seule opération d'oxydation, d'au moins deux fluides nécessaires (ou susceptibles de l'être) au fonctionnement d'une installation fixe telle fixe telle une borne de recharge en hydrogène ou mobile tel un véhicule comme un aéronef.

Ainsi, l'oxydation anodique d'une solution de peroxyde d'hydrogène conduit à l'obtention des éléments suivants :
- de l'oxygène O₂ issu de la séparation de la molécule de dioxygène de celle de dihydrogène éclatée en deux ions hydrogène,
- d'un reliquat de peroxyde d'hydrogène H₂O₂ non décomposé,
- de l'eau H₂O issue de la solution.

La circulation de l'eau issue de la solution permet d'évacuer la chaleur de la réaction. Les cations d'hydrogène ne sont pas exploités sur cette première phase.

L'oxygène produit va permettre de proposer la mise à disposition de ce gaz pour l'installation. Il apparaît ainsi que l'oxygène va pouvoir être produit à la demande et en grande quantité. Cette production d'oxygène est couplée à la diminution de la concentration de peroxyde d'hydrogène dans la solution d'eau, ce qui permet de disposer d'un grand volume d'eau. Cette eau est donc une fois reminéralisée non seulement potable mais également traitée du fait des propriétés biocides du reliquat de peroxyde.

La production d'une eau traitée résout les différents problèmes liés à sa qualité et à l'entretien du réseau d'eau potable de l'installation.

Cette conception proposée de la cellule évite la pollution de la cathode par la présence d'autres ions issus des minéraux contenus selon une caractéristique ci-dessus décrite dans la solution de peroxyde d'hydrogène.

Plus précisément, cette cellule comprend une ou plusieurs membranes de type cationique séparant deux électrodes :
- une cathode reliée au pôle -,
- une anode reliée au pôle + d'un générateur.

La compartimentation par paroi souple a pour effet technique que lorsqu'un des liquides perd du volume, l'autre liquide en prend sans que le volume total du réservoir ne change.

Les différents éléments sont agencés de sorte que le volume d'eau pèse sur le volume de peroxyde et assure sa sortie et l'alimentation de la cellule. Ainsi, on profite du poids de l'eau.

La paroi peut être partiellement ou complètement souple. Elle résiste au peroxyde d'hydrogène et empêche la décomposition catalytique dudit peroxyde.

Cette caractéristique définit en outre un procédé avec une opération de stockage de l'hydrogène produit dans le réservoir séparé décrit.

L'invention concerne également le procédé mis en oeuvre par les caractéristiques de dispositif ci-dessus ou ci-dessous décrites.

Cette caractéristique requiert également une phase de procédé qui comprend une opération de remplissage par une solution de peroxyde d'hydrogène d'un réservoir équipant l'installation fixe ou mobile. La concentration de peroxyde d'hydrogène dans la solution est selon une caractéristique particulièrement avantageuse de l'invention, comprise entre dix et soixante-dix pour cent.

Selon une phase particulièrement originale du procédé, ce dernier comprend une opération de remplissage du réservoir d'eau potable équipant l'installation fixe ou mobile par une solution de peroxyde d'hydrogène. Ainsi, la solution de peroxyde d'hydrogène est stockée dans un volume remplaçant celui de l'oxygène mais également celui de l'eau potable. Ledit réservoir accueillant le peroxyde d'hydrogène est alors équipé d'une soupape de sécurité.

Ledit réservoir peut également être rendu passif ou être fabriqué en aluminium pour éviter la dismutation décrite plus haut.

Selon un mode de réalisation particulièrement avantageux évitant le remplacement des réservoirs et canalisations en acier inoxydable déjà disponibles sur une installation telle un aéronef, la solution de peroxyde d'hydrogène est stabilisée par l'ajout d'agents séquestrants métaux à l'état de trace (très petite quantité).

Le gain de place et de masse est substantiel et répond aux objectifs de l'invention.

Selon une autre caractéristique, le procédé consiste à minéraliser l'eau de la solution de peroxyde d'hydrogène, ce qui évite la nécessité d'une cellule de reminéralisation ou permet de la sous-dimensionner.

L'énergie électrique de la source d'alimentation en électricité nécessaire à l'oxydation anodique du peroxyde d'hydrogène est issue de batteries ou de l'électricité en surplus de l'installation par exemple celle disponible lors du décollage et lors du vol en vitesse de croisière de l'avion lorsque l'installation est une installation mobile tel un avion.

L'alimentation en électricité peut être réalisée par différentes solutions notamment par panneaux solaires.

Ainsi, sur la base de la seule solution de peroxyde d'hydrogène, l'invention propose la production de deux fluides nécessaires à l'exploitation d'une installation mobile tel un aéronef, à savoir l'oxygène et l'eau.

Cette oxydation anodique se différencie de la dismutation connue pour le peroxyde qui ne produit pas les ions hydrogène H⁺.

L'hydrogène stocké va pouvoir être exploité dans le cadre d'une deuxième phase de production d'électricité toujours en exploitant la même solution de peroxyde d'hydrogène stockée, non comme réducteur mais comme oxydant afin de former une pile à combustible. Ainsi, selon une autre caractéristique particulièrement avantageuse, le procédé comprend une opération d'oxydation de l'hydrogène produit couplée à une opération de réduction du peroxyde d'hydrogène à des fins de production d'électricité et d'eau. La quantité d'électricité produite est supérieure à celle nécessaire à l'oxydation anodique.

Cette pile à combustible peut être mise en oeuvre par une cellule indépendante ou par l'inversion de la cellule ayant produit l'hydrogène. Ainsi, le procédé de l'invention propose en sus de produire de l'oxygène et de l'eau, d'assurer la production d'électricité nécessaire au fonctionnement de l'installation au moins partiellement. L'embarquement de solution de peroxyde d'hydrogène dans une installation tel un aéronef devient alors une solution globale au problème de stockage, de masse et de production d'énergie pour l'aéronef.

Comme expliquée plus haut, l'utilisation de peroxyde d'hydrogène permet de produire dans une première phase de l'hydrogène nécessaire dans une deuxième phase à la production d'électricité. Ces deux étapes peuvent être appliquées à toute installation susceptible de voir son réservoir de peroxyde régulièrement alimenté. En effet, l'énergie nécessaire à la production d'hydrogène à partir de peroxyde d'hydrogène est inférieure à l'énergie produite par une pile à combustible utilisant le couple hydrogène/peroxyde d'hydrogène. Une telle installation présenterait alors une grande autonomie sans production de gaz d'échappement autre que de la vapeur d'eau pouvant elle-même être récupérée. Un tel procédé comprend une opération de neutralisation du peroxyde d'hydrogène toujours présent dans l'eau. Cette eau récupérée pourrait revenir dans le volume de stockage initial compartimenté à cet effet. Néanmoins, se pose alors la question de la mise en oeuvre de la compartimentation ou celle de la concentration de peroxyde d'hydrogène dans la solution qui doit être suffisante pour permettre une production efficace. A cette fin, selon une caractéristique particulièrement avantageuse de l'invention, le procédé comprend une opération de pré-concentration de la solution de peroxyde d'hydrogène avant l'opération d'oxydation anodique ce qui va permettre de faire fonctionner la cellule quelle que soit la concentration en peroxyde d'hydrogène.

Afin de supprimer les impuretés éventuellement présentes dans l'oxygène obtenu, le procédé comprend une opération de traitement de l'oxygène produit.

De plus, si le procédé comprend une opération de reminéralisation de l'eau produite, cette dernière est moins importante que si l'eau était seulement issue d'une cellule de type pile à combustible puisque dans la première phase de procédé, selon une caractéristique ci-dessus décrite, l'eau de la solution de peroxyde est minéralisée.

Selon une autre caractéristique particulièrement avantageuse du dispositif, ladite anode comprend plusieurs couches :
- une première couche poreuse contenant un catalyseur de production des électrons e⁻ d'oxydation anodique,
- une deuxième couche poreuse contenant un catalyseur de capture des électrons d'oxydation anodique, et
- un conducteur électrique non poreux isolé électriquement sur la face en contact avec la première couche et sur la face en contact avec le peroxyde d'hydrogène.

Ainsi, l'anode de la cellule d'oxydation contient des catalyseurs spécifiques à l'accélération de l'oxydation anodique permettant un transfert rapide des ions et des électrons. Ces catalyseurs peuvent être sur plusieurs couches.

Selon l'invention, l'anode contient une membrane poreuse. Selon un mode de réalisation préféré mais non limitatif cette membrane poreuse est en or supportée par une membrane poreuse en platine.

Selon une autre caractéristique particulièrement avantageuse de l'invention, le dispositif est en outre remarquable en ce qu'il comprend pour le peroxyde d'hydrogène, un réservoir réalisé dans une des matières suivantes :
- acier inoxydable,
- aluminium,
- fibre de carbone,
- matériau composite,
- plastique.

Selon une autre caractéristique particulièrement avantageuse de l'invention, le dispositif est remarquable en ce que l'électrode avec laquelle la solution de peroxyde vient en contact dans la cellule est recouverte d'une membrane présentant les caractéristiques suivantes :
- perméable à la molécule du peroxyde d'hydrogène,
- imperméable à l'eau,
- perméable aux ions.

Une telle caractéristique permet l'utilisation d'une solution contenant du peroxyde quelle que soit la concentration. Elle permet en outre d'envisager le retour de l'eau produite par la cellule dans le réservoir contenant la solution de peroxyde sans influencer le rendement.

Selon une autre caractéristique particulièrement avantageuse de l'invention, le dispositif comprend un réservoir séparé de stockage de l'oxygène produit.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés.

### BRÈVE DESCRIPTION DES DESSINS

La figure 1 est un dessin schématique d'un mode de réalisation d'une mise en oeuvre à bord d'un aéronef de la première phase du procédé de l'invention;
La figure 2 est le dessin schématique de la figure 1 illustrant un mode de réalisation d'une mise en oeuvre de la deuxième phase du procédé de l'invention;
La figure 3 est un dessin schématique de détail d'un exemple d'une cellule d'oxydation anodique exploitée pour la première phase d'un procédé hors de la portée de la présente invention;
La figure 3a correspond à la figure 3 avec une membrane de pré-concentration associée à l'anode;
La figure 4 est un dessin schématique de détail d'un mode de réalisation de la pile à combustible exploitée pour la deuxième phase du procédé;
La figure 5 est un dessin schématique illustrant un exemple d'un circuit mettant en oeuvre les deux phases d'un procédé pour un véhicule terrestre hors de la portée de la présente invention;
La figure 5a, qui est un dessin schématique illustrant un mode de réalisation d'un procédé selon la présente invention, correspond à la figure 5 avec une membrane souple compartimentant le réservoir de peroxyde.

### DESCRIPTION DES MODES DE RÉALISATION PRÉFÉRÉS

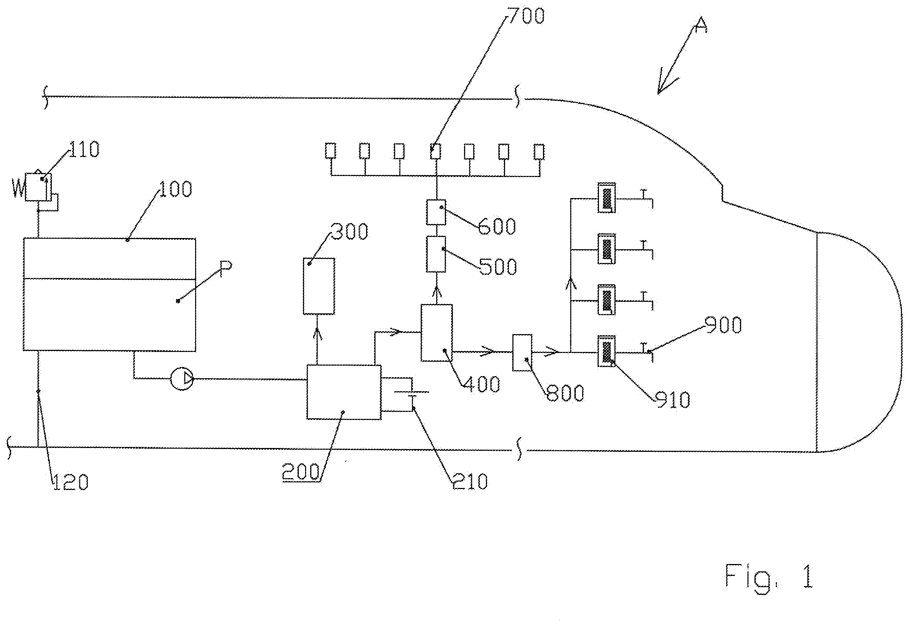

Comme illustré sur le dessin de la figure 1, l'aéronef A est équipé d'un dispositif permettant de mettre en oeuvre le procédé de l'invention.

Ce dispositif comprend un réservoir 100 dans lequel est stocké du peroxyde d'hydrogène P. Ce réservoir 100 comprend une soupape de sécurité 110 ainsi qu'une conduite 120 permettant son remplissage à partir de l'extérieur. Une autre conduite 130 permet au moyen d'une pompe 140, d'amener ledit peroxyde dans une cellule d'oxydation anodique 200 laquelle est associée à une source d'alimentation en électricité 210.

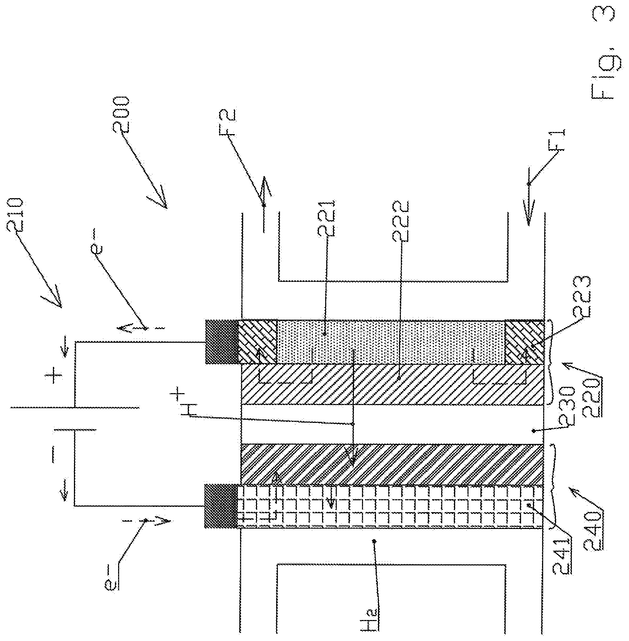

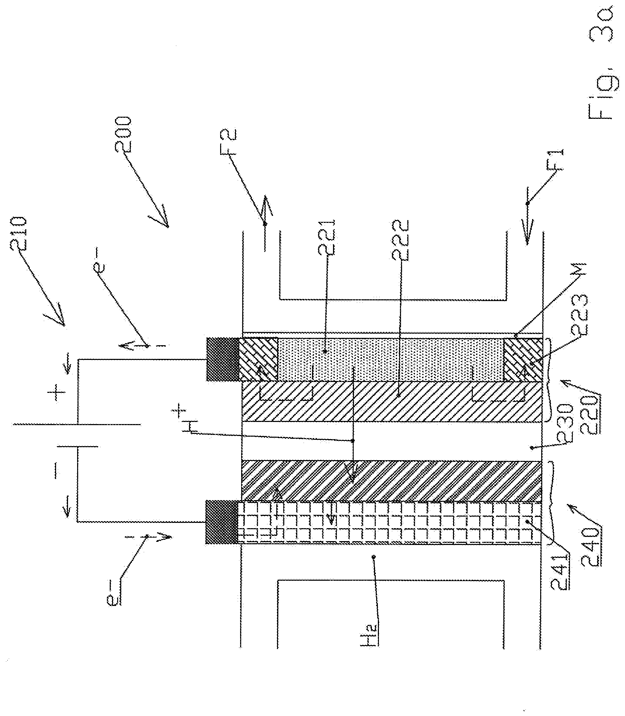

Comme cela apparaît sur la figure 3, l'activation électrique permet à partir de peroxyde H₂O₂ (solution de peroxyde d'hydrogène contenant H₂O₂ et H₂O symbolisée par la flèche F1) d'obtenir des ions hydrogène H⁺ des électrons e⁻ et de l'oxygène O₂ selon la réaction suivante :

H₂O₂ --> 2H⁺ + 2e⁻ + O₂

Il résulte de cette réaction de l'oxygène O₂, de l'eau H₂O issue de la solution de peroxyde et du peroxyde d'hydrogène H₂O₂ n'ayant pas été oxydé et donc à une concentration plus faible. Ce résultat symbolisé par la flèche F2.

L'oxydation anodique est obtenue au moyen d'une anode 220 particulière présentant plusieurs couches, parmi celles ci :
- une première couche poreuse 221 contenant un catalyseur de production des électrons e⁻ d'oxydation anodique,
- une deuxième couche poreuse 222 contenant un catalyseur de capture des électrons d'oxydation anodique.

L'anode comprend également un conducteur électrique non poreux isolé électriquement sur la face en contact avec la première couche et sur la face en contact avec le peroxyde d'hydrogène.

De plus, la face en contact avec le peroxyde d'hydrogène est traitée pour éviter la décomposition parasite de ce dernier.

La première couche et la deuxième couche forment un dipôle catalytique. Les matériaux de ces couches sont choisis de telle façon qu'en l'absence de connexion de la cellule à un générateur électrique, le potentiel électrique de la première couche soit inférieur à celui de la deuxième couche. Le dipôle catalytique ainsi formé présente un potentiel électrique compris entre celui de la première couche et celui de la deuxième couche.

La tension électrique nécessaire à cette oxydation est avantageusement inférieure à la tension d'électrolyse, ce qui évite que cette dernière réaction n'intervienne.

Selon un mode de réalisation non limitatif, ces deux couches peuvent être constituées de matériaux métalliques de la famille platine, or, ruthénium, rhodium, palladium, argent, nickel cobalt.

Une membrane cationique 230 sépare l'anode 220 de la cathode 240. Selon un mode de réalisation lié au mode de réalisation décrivant une solution de peroxyde minéralisée, cette membrane ne laisse passer que les cations H⁺.

Les ions hydrogène associés à des électrons permettent d'obtenir des atomes d'hydrogène ou dihydrogène H₂ au niveau de la cathode 240 où est réalisée la réduction des cations H⁺ en dihydrogène H₂. Pour ce faire, la cathode présente un conducteur électrique poreux 241.

Le mode de réalisation de la figure 3a diffère de celui de la figure 3 seulement en ce qu'une membrane M de pré-concentration est associée à l'anode 220. Cette membrane met en oeuvre une opération de pré-concentration avant l'opération d'oxydation anodique. Ainsi, la cellule fonctionne quelle que soit la concentration en peroxyde d'hydrogène de la solution.

Comme illustré par le dessin de la figure 1, l'hydrogène produit est stocké dans un réservoir 300 et l'oxygène, l'eau et le reliquat de peroxyde d'hydrogène sont orientés vers une cellule de récupération 400.

Cette cellule de récupération 400 oriente l'oxygène vers une unité de traitement 500 et vers un réservoir 600 de stockage de l'oxygène traité. Ce réservoir de stockage d'oxygène 600 est en liaison avec les masques à oxygène 700 de l'aéronef.

L'eau et le reliquat de peroxyde d'hydrogène sont orientés vers une cellule de reminéralisation 800 qui corrige la minéralisation de l'eau qui va passer dans des filtres 910 associés et disposés en amont des robinets 900 du réseau d'eau potable de l'aéronef.

Ces filtres 910 assurent la destruction du peroxyde d'hydrogène.

Il apparaît que la première phase de procédé permet de disposer d'oxygène à volonté en alimentant électriquement la cellule 200. Il apparaît également qu'il n'est plus nécessaire de disposer d'un réservoir d'eau potable puisque la solution de peroxyde débarrassée de son peroxyde va servir d'eau potable une fois reminéralisée. De plus, le reliquat de peroxyde non oxydé n'est neutralisé qu'en extrémité de réseau, ce qui permet de profiter des caractéristiques biocides du peroxyde d'hydrogène qui va optimiser le traitement du réseau en évitant la présence des bactéries.

La deuxième phase du procédé est une phase de production d'énergie par un principe de pile à combustible en utilisant l'hydrogène produit comme réducteur et le peroxyde d'hydrogène stocké dans le réservoir 100 comme oxydant.

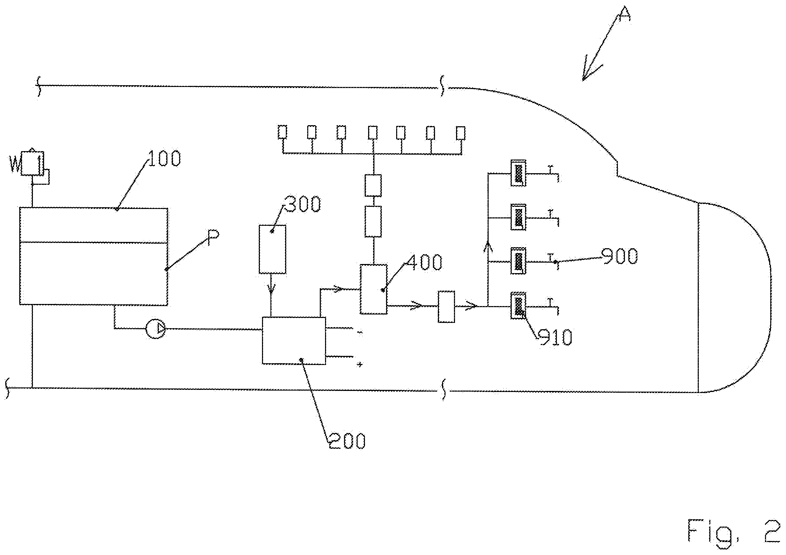

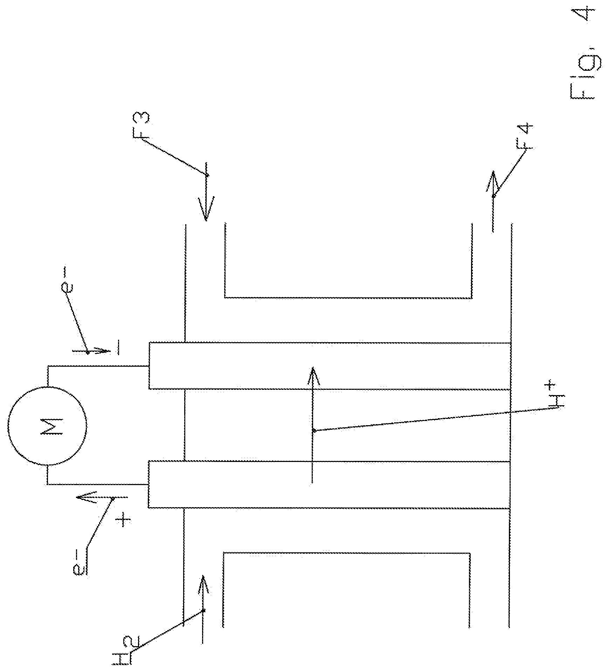

Ainsi, comme illustré par le dessin de la figure 2, la solution de peroxyde d'hydrogène P stockée dans le réservoir 100 est conduit à la cellule 200 qui est alors une cellule réversible ou une cellule indépendante et qui se comporte comme une pile à combustible telle qu'illustrée par le schéma de la figure 4 où la flèche F3 symbolise la solution H₂O₂ et H₂O.

L'oxydation du dihydrogène et la réduction du peroxyde d'hydrogène permettent la création d'un courant électrique issu des réactions suivantes :

H₂ --> 2H⁺ + 2e⁻

H₂O₂ + 2e⁻ + 2H⁺ --> 2H₂O

Comme décrite ci-dessus la pile à combustible produit également de l'eau. La flèche F4 symbolise donc cette solution contenant un reliquat de peroxyde c'est à dire H₂O₂ (à une concentration plus faible) et H₂O. Cette eau une fois reminéralisée associée à l'eau de la solution vient alimenter les robinets 900. De plus, comme pour la phase d'alimentation, le reliquat de peroxyde n'ayant pas été réduit est neutralisé en amont des robinets 900.

Il apparaît ainsi que la deuxième phase du procédé permet la production d'électricité dans l'aéronef A.

A titre d'exemple, la tension d'oxydation anodique du peroxyde d'hydrogène peut être de 0,8 volt et la tension de la pile à combustible de l'invention peut être de 1,8 volts.

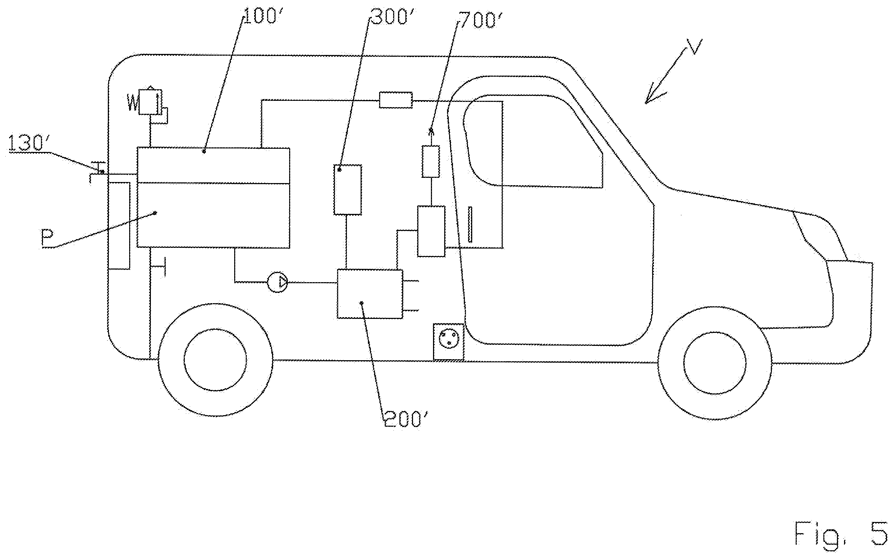

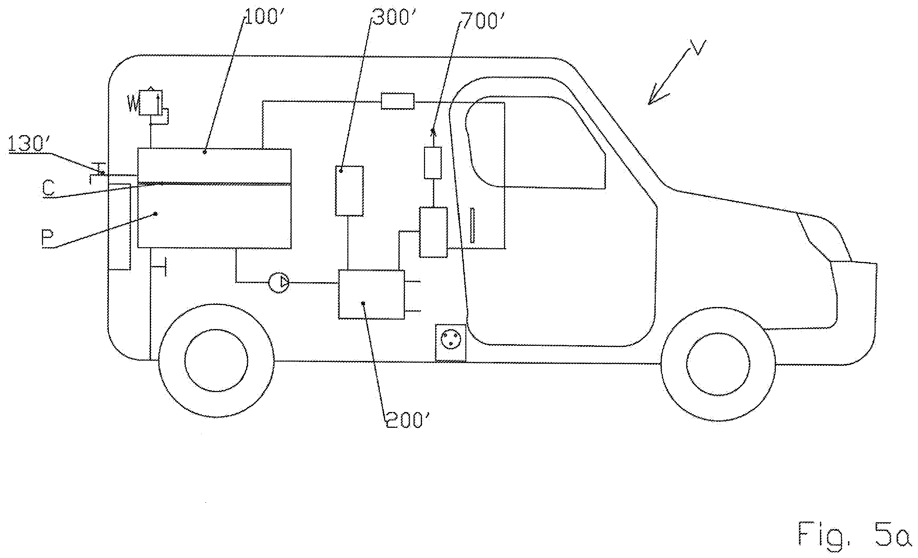

Le dessin de la figure 5 illustre un véhicule V accueillant un exemple d'un dispositif mettant en oeuvre un procédé hors de la portée de l'invention. Le réservoir 100' est rempli de peroxyde d'hydrogène P. Pour une telle application, la première phase de procédé est surtout utilisée pour produire l'hydrogène qui sera stocké dans le réservoir 300'. En effet, l'eau issue de la solution est moins utile mais pourrait l'être pour un véhicule transportant beaucoup de passagers sur une longue distance. De plus, l'oxygène peut être partiellement introduit dans l'habitacle au moyen d'une bouche 700'.

L'hydrogène produit va permettre la mise en oeuvre de la pile à combustible 200' en association avec le peroxyde d'hydrogène. L'électricité produite permet l'alimentation du moyen de motorisation du véhicule V.

L'eau produite par la première et la deuxième phase de procédé est neutralisée et renvoyée dans le réservoir 100' qui est compartimenté à cet effet. Un robinet de vidange 130' est associé à ce compartiment.

Le mode de réalisation de la figure 5a diffère de l'exemple illustré dans la figure 5 seulement en ce qu'une paroi déformable ou membrane souple de compartimentation C vient séparer le bas du réservoir où se trouve la solution de peroxyde du haut du réservoir accueillant l'eau produite. Sous l'effet du poids de l'eau, la solution de peroxyde sort du réservoir.

On comprend que le procédé et le dispositif, qui viennent d'être ci-dessus décrits et représentés, l'ont été en vue d'une divulgation plutôt que d'une limitation. Bien entendu, divers aménagements, modifications et améliorations pourront être apportés à l'exemple ci-dessus, sans pour autant sortir du cadre de l'invention établi par les revendications.

## Revendications

1. Dispositif permettant de mettre en oeuvre un procédé de gestion de fluides nécessaires à l'exploitation d'une installation fixe ou mobile, consistant sur la base d'une solution de peroxyde d'hydrogène soumise à un courant électrique produit par une source d'alimentation en électricité, de disposer par une seule opération d'oxydation, d'au moins deux fluides nécessaires au fonctionnement d'une installation fixe ou mobile,
le dispositif étant **CARACTÉRISÉ PAR LE FAIT QU'**il comprend :
une cellule d'oxydation (200) qui, comprenant ladite source d'alimentation en électricité, est équipée d'une anode (220) où est réalisée ladite oxydation et d'une cathode (240) séparées par une membrane cationique (230) qui ne laisse passer que les ions (H+), le pôle positif de la source d'alimentation étant relié à l'anode, ladite anode étant recouverte d'une membrane (M) perméable à la molécule du peroxyde d'hydrogène, imperméable à l'eau, perméable aux ions, pour mettre en oeuvre les opérations suivantes :
- une opération de pré-concentration du peroxyde à oxyder en le mettant en contact avec la membrane perméable (électrode reliée au pôle + d'un générateur),
- une opération d'oxydation anodique sur l'anode de l'élément du peroxyde d'hydrogène à des fins de production de dioxygène, d'eau et de cations d'hydrogène par soumission dudit peroxyde d'hydrogène à un courant électrique produit par une source d'alimentation en électricité,
- une opération de réduction cathodique (sur une cathode reliée au pôle - d'un générateur et séparée de l'anode par une membrane échangeuse d'ions H+), des cations d'hydrogène issus de ladite opération d'oxydation anodique à des fins de production de dihydrogène,
un réservoir compartimenté (100) par une paroi déformable (C) en un volume inférieur et en un volume supérieur, le volume inférieur accueillant une solution de peroxyde d'hydrogène, le volume supérieur accueillant l'eau produite par l'opération d'oxydation anodique, les différents éléments étant agencés de sorte que le volume d'eau pèse sur le volume de peroxyde, la solution de peroxyde sortant du réservoir sous l'effet du poids de l'eau et alimente la cellule, la compartimentation par paroi souple ayant pour effet technique que lorsqu'un des liquides perd du volume, l'autre liquide en prend sans que le volume total du réservoir ne change, et
un réservoir séparé (300) de stockage de l'hydrogène produit.

2. Dispositif selon la revendication 1, **CARACTÉRISÉ PAR LE FAIT QUE** ladite anode (220) comprend plusieurs couches :
- une première couche (221) poreuse contenant un catalyseur de production des électrons (e⁻) d'oxydation anodique,
- une deuxième couche (222) poreuse contenant un catalyseur de capture des électrons (e⁻) d'oxydation anodique, et
- un conducteur électrique (223) non poreux isolé électriquement sur la face en contact avec la première couche et sur la face en contact avec le peroxyde d'hydrogène (P).

3. Dispositif selon la revendication 1, **CARACTÉRISÉ PAR LE FAIT QU'**il comprend pour le peroxyde d'hydrogène, un réservoir réalisé dans une des matières suivantes :
- acier inoxydable,
- aluminium,
- fibre de carbone,
- matériau composite,
- plastique.

4. Dispositif selon la revendication 1, **CARACTÉRISÉ PAR LE FAIT QU'**il comprend un réservoir séparé (600) de stockage de l'oxygène produit.

5. Procédé de gestion de fluides nécessaires à l'exploitation d'une installation fixe ou mobile, **CARACTERISE PAR LE FAIT QU'**il est mis en oeuvre par le dispositif selon l'une quelconque des revendications 1 à 4.

6. Procédé selon la revendication 5, **CARACTÉRISÉ PAR LE FAIT QU'**il comprend une opération de remplissage par une solution de peroxyde d'hydrogène (P) d'un réservoir (100) équipant l'installation fixe ou mobile (A).

7. Procédé selon la revendication 5, **CARACTÉRISÉ PAR LE FAIT QU'**il comprend une opération de stockage de l'hydrogène produit.

8. Procédé selon la revendication 5, **CARACTÉRISÉ EN CE QU'**il comprend une opération d'oxydation de l'hydrogène produit couplée à une opération de réduction du peroxyde d'hydrogène (P) à des fins de production d'électricité et d'eau.

9. Procédé selon la revendication 5, **CARACTÉRISÉ EN CE QU'**il comprend une opération de traitement de l'oxygène produit.

10. Procédé selon la revendication 5, **CARACTÉRISÉ EN CE QU'**il comprend une opération de reminéralisation de l'eau produite.

11. Procédé selon la revendication 5, **CARACTÉRISÉ EN CE QU'**il comprend une opération de neutralisation du peroxyde d'hydrogène toujours présent dans l'eau.

12. Procédé selon la revendication 5 où l'installation fixe ou mobile comprend un réservoir d'eau potable, **CARACTÉRISÉ EN CE QU'**il comprend une opération de remplissage du réservoir d'eau potable (100) par une solution de peroxyde d'hydrogène (P).

13. Procédé selon la revendication 5 où l'installation est une installation mobile tel un avion (A), **CARACTÉRISÉ EN CE QUE** l'énergie électrique nécessaire à l'oxydation anodique du peroxyde d'hydrogène est issue de l'électricité produite lors du décollage de l'avion ou lors du vol à vitesse de croisière de l'avion.

14. Procédé selon la revendication 5, **CARACTÉRISÉ EN CE QUE** l'eau de la solution de peroxyde d'hydrogène (P) est minéralisée.

15. Procédé selon la revendication 5, **CARACTÉRISÉ EN CE QUE** la concentration de peroxyde d'hydrogène (P) dans la solution est comprise entre dix et soixante-dix pour cent.

16. Procédé selon la revendication 5, **CARACTÉRISÉ EN CE QU'**il comprend une opération de pré-concentration de la solution de peroxyde d'hydrogène avant l'opération d'oxydation anodique.

## Patentansprüche

1. Vorrichtung zur Durchführung eines Verfahrens zur Verwaltung von Flüssigkeiten, die für den Betrieb einer festen oder mobilen Anlage erforderlich sind, das auf der Grundlage einer Wasserstoffperoxidlösung, die einem von einer Stromversorgungsquelle erzeugten elektrischen Strom ausgesetzt wird, darin besteht, durch einen einzigen Oxidationsvorgang über mindestens zwei Flüssigkeiten zu verfügen, die für den Betrieb einer festen oder mobilen Anlage erforderlich sind,
wobei die Vorrichtung **DADURCH GEKENNZEICHNET IST, DASS** sie umfasst:
eine Oxidationszelle (200), die, die Stromversorgungsquelle umfassend, mit einer Anode (220), an der die Oxidation durchgeführt wird, und einer Kathode (240) ausgerüstet ist, die durch eine kationische Membran (230) getrennt sind, die nur (H+)-Ionen durchlässt, wobei der Pluspol der Stromquelle mit der Anode verbunden ist, wobei die Anode mit einer Membran (M) überzogen ist, die für das Wasserstoffperoxidmolekül durchlässig, für Wasser undurchlässig, für Ionen durchlässig ist, um die folgenden Vorgänge auszuführen:
- einen Vorgang der Vorkonzentration des zu oxidierenden Peroxids, indem es mit der durchlässigen Membran (Elektrode, die mit dem Pluspol eines Generators verbunden ist) in Kontakt gebracht wird,
- einen Vorgang der anodischen Oxidation an der Anode des Elements Wasserstoffperoxid zur Erzeugung von Disauerstoff, Wasser und Wasserstoffkationen, indem das Wasserstoffperoxid einem elektrischen Strom ausgesetzt wird, der von einer Stromversorgungsquelle erzeugt wird,
- einen Vorgang der kathodischen Reduktion (an einer Kathode, die mit dem Minuspol eines Generators verbunden und von der Anode durch eine H+-Ionenaustauschmembran getrennt ist), der Wasserstoffkationen, die aus dem genannten Vorgang der anodischen Oxidation stammen, zur Herstellung von Dihydrogen,
einen Tank(100), der durch eine verformbare Wand (C) in ein unteres und ein oberes Volumen unterteilt ist, wobei das untere Volumen eine Wasserstoffperoxidlösung aufnimmt, das obere Volumen das durch den Vorgang der anodischen Oxidation erzeugte Wasser aufnimmt, wobei die verschiedenen Elemente so angeordnet sind, dass das Wasservolumen auf dem Peroxidvolumen lastet, wobei die Peroxidlösung unter dem Gewicht des Wassers aus dem Tank austritt und die Zelle versorgt, wobei die Unterteilung durch eine flexible Wand den technischen Effekt hat, dass, wenn eine der Flüssigkeiten an Volumen verliert, die andere Flüssigkeit an Volumen zunimmt, ohne dass sich das Gesamtvolumen des Tanks ändert, und
einen separaten Tank (300) zur Speicherung des erzeugten Wasserstoffs.

2. Vorrichtung nach Anspruch 1, **DADURCH GEKENNZEICHNET, DASS** die Anode (220) mehrere Schichten umfasst:
- eine erste poröse Schicht (221), die einen Katalysator zur Erzeugung von Elektronen (e⁻) der anodischen Oxidation enthält,
- eine zweite poröse Schicht (222), die einen Katalysator zum Einfangen von Elektronen (e⁻) der anodischen Oxidation enthält,
- einen elektrisch isolierten, nicht porösen elektrischen Leiter (223) auf der mit der ersten Schicht in Kontakt stehenden Seite und auf der mit dem Wasserstoffperoxid (P) in Kontakt stehenden Seite.

3. Vorrichtung nach Anspruch 1, **DADURCH GEKENNZEICHNET, DASS** sie für das Wasserstoffperoxid einen Tank umfasst, der aus einem der folgenden Materialien hergestellt ist:
- Edelstahl,
- Aluminium,
- Kohlefaser,
- Verbundstoff,
- Kunststoff.

4. Vorrichtung nach Anspruch 1, **DADURCH GEKENNZEICHNET, DASS** sie einen separaten Tank (600) zur Speicherung des erzeugten Sauerstoffs umfasst.

5. Verfahren zur Verwaltung von Flüssigkeiten, die für den Betrieb einer festen oder mobilen Anlage erforderlich sind, **DADURCH GEKENNZEICHNET, DASS** es durch die Vorrichtung nach einem der Ansprüche 1 bis 4 umgesetzt wird.

6. Verfahren nach Anspruch 5, **DADURCH GEKENNZEICHNET, DASS** es einen Vorgang umfasst, bei dem ein Tank (100), mit dem die feste oder mobile Anlage (A) ausgerüstet ist, mit einer Wasserstoffperoxidlösung (P) gefüllt wird.

7. Verfahren nach Anspruch 5, **DADURCH GEKENNZEICHNET, DASS** es einen Vorgang des Speicherns des erzeugten Wasserstoffs umfasst.

8. Verfahren nach Anspruch 5, **DADURCH GEKENNZEICHNET, DASS** es einen Vorgang der Oxidation des erzeugten Wasserstoffs umfasst, der mit einem Vorgang der Reduktion von Wasserstoffperoxid (P) zur Erzeugung von Elektrizität und Wasser gekoppelt ist.

9. Verfahren nach Anspruch 5, **DADURCH GEKENNZEICHNET, DASS** es einen Vorgang der Behandlung des erzeugten Sauerstoffs umfasst.

10. Verfahren nach Anspruch 5, **DADURCH GEKENNZEICHNET, DASS** dass es einen Vorgang der Remineralisierung des erzeugten Wassers umfasst.

11. Verfahren nach Anspruch 5, **DADURCH GEKENNZEICHNET, DASS** es einen Vorgang der Neutralisierung des immer noch im Wasser vorhandenen Wasserstoffperoxids umfasst.

12. Verfahren nach Anspruch 5, wobei die feste oder mobile Anlage einen Trinkwassertank umfasst, **DADURCH GEKENNZEICHNET, DASS** es einen Vorgang umfasst, bei dem der Trinkwassertank (100) mit einer Wasserstoffperoxidlösung (P) gefüllt wird.

13. Verfahren nach Anspruch 5, wobei die Anlage eine mobile Anlage wie ein Flugzeug (A) ist, **DADURCH GEKENNZEICHNET, DASS** die für die anodische Oxidation von Wasserstoffperoxid erforderliche elektrische Energie aus Strom gewonnen wird, der beim Start des Flugzeugs oder beim Flug des Flugzeugs mit Reisegeschwindigkeit erzeugt wird.

14. Verfahren nach Anspruch 5, **DADURCH GEKENNZEICHNET, DASS** das Wasser in der Wasserstoffperoxidlösung (P) mineralisiert ist.

15. Verfahren nach Anspruch 5, **DADURCH GEKENNZEICHNET, DASS** die Konzentration von Wasserstoffperoxid (P) in der Lösung zwischen zehn und siebzig Prozent liegt.

16. Verfahren nach Anspruch 5, **DADURCH GEKENNZEICHNET, DASS** es einen Vorgang der Vorkonzentration der Wasserstoffperoxidlösung vor dem Vorgang der anodischen Oxidation umfasst.

## Claims

1. Device making it possible to implement a method for managing fluids necessary for the operation of a fixed or movable installation, consisting, based on a hydrogen peroxide solution subjected to an electric current produced by an electricity supply source, of having, by one single oxidation operation, at least two fluids necessary for the operation of a fixed or movable installation,
the device being **CHARACTERISED IN THAT** it comprises:
an oxidation cell (200) which, comprising said electricity supply source, is equipped with an anode (220) where said oxidation is carried out and a cathode (240) separated by a cationic membrane (230) which only lets ions (H+) pass, the positive pole of the supply source being connected to the anode, said anode being covered with a membrane (M) which is permeable to the hydrogen peroxide molecule, impermeable to water, permeable to ions, to implement the following operations:
- a pre-concentration operation of the peroxide to be oxidised by bringing it into contact with the permeable membrane (electrode connected to the + pole of a generator),
- an anodic oxidation operation on the anode of the hydrogen peroxide element for the purpose of producing dioxygen, water and hydrogen cations by subjecting said hydrogen peroxide to an electric current produced by an electricity supply source,
- a cathodic reduction operation (on a cathode connected to the - pole of a generator and separated from the anode by an H+ ion exchange membrane), hydrogen cations from said anodic oxidation operation for the purpose of producing dihydrogen,
a tank (100) compartmentalised by a deformable wall (C) into a lower volume and an upper volume, the lower volume receiving a hydrogen peroxide solution, the upper volume receiving the water produced by the anodic oxidation operation, the various elements being arranged such that the volume of water weighs on the volume of peroxide, the peroxide solution exiting from the tank under the effect of the weight of the water and supplies the cell, the compartmentalisation by flexible wall having the technical effect that when one of the liquids loses volume, the other liquid takes this without the total volume of the tank changing, and
a separate tank (300) for storing the hydrogen produced.

2. Device according to claim 1, **CHARACTERISED IN THAT** said anode (220) comprises several layers:
- a first porous layer (221) containing an anodic oxidation (e-) electron production catalyst,
- a second porous layer (222) containing an anodic oxidation (e-) electron capture catalyst, and
- a non-porous electrical conductor (223) electrically insulated on the face in contact with the first layer and on the face in contact with the hydrogen peroxide (P).

3. Device according to claim 1, **CHARACTERISED IN THAT** it comprises, for hydrogen peroxide, a tank made of one of the following materials:
- stainless steel,
- aluminium,
- carbon fibre,
- composite material,
- plastic.

4. The device according to claim 1, **CHARACTERISED IN THAT** it comprises a separate tank (600) for storing the oxygen produced.

5. Method for managing fluids necessary for the operation of a fixed or movable installation, **CHARACTERISED IN THAT** it is implemented by the device according to any one of claims 1 to 4.

6. Method according to claim 5, **CHARACTERISED IN THAT** it comprises an operation of filling a tank (100) equipping the fixed or movable installation (A) with a hydrogen peroxide solution (P).

7. Method according to claim 5, **CHARACTERISED IN THAT** it comprises an operation for storing the hydrogen produced.

8. Method according to claim 5, **CHARACTERISED IN THAT** it comprises an operation of oxidising the hydrogen produced coupled with an operation of reducing the hydrogen peroxide (P) for the purpose of producing electricity and water.

9. Method according to claim 5, **CHARACTERISED IN THAT** it comprises an operation for treating the oxygen produced.

10. Method according to claim 5, **CHARACTERISED IN THAT** it comprises an operation of remineralising the water produced.

11. Method according to claim 5, **CHARACTERISED IN THAT** it comprises an operation of neutralising the hydrogen peroxide still present in the water.

12. Method according to claim 5, wherein the fixed or movable installation comprises a drinking water tank, **CHARACTERISED IN THAT** it comprises an operation of filling the drinking water tank (100) with a hydrogen peroxide solution (P).

13. Method according to claim 5, wherein the installation is a movable installation such as an aircraft (A), **CHARACTERISED IN THAT** the electrical energy necessary for the anodic oxidation of hydrogen peroxide comes from the electricity produced during the take-off of the aeroplane or during the flight at cruising speed of the aircraft.

14. Method according to claim 5, **CHARACTERISED IN THAT** the water from the hydrogen peroxide solution (P) is mineralised.

15. Method according to claim 5, **CHARACTERISED IN THAT** the concentration of hydrogen peroxide (P) in the solution is between ten and seventy percent.

16. Method according to claim 5, **CHARACTERISED IN THAT** it comprises an operation of pre-concentrating the hydrogen peroxide solution before the anodic oxidation operation.
